# EUROPÄISCHE PATENTANMELDUNG

(11) **EP 4 357 945 A2**
(43) Veröffentlichungstag der Anmeldung: **24.04.2024**
(21) Anmeldenummer: 23208338.6
(22) Anmeldetag: 20.04.2011
(51) Int. Cl.: G06F 21/00

(54) **VERFAHREN ZUM LESEN EINES ATTRIBUTS AUS EINEM ID-TOKEN**

(30) Priorität: 22.04.2010 DE 102010028133
(62) Teilanmeldung aus: 11717537.2
(71) Anmelder: Bundesdruckerei GmbH, 10969 Berlin (DE)
(72) Erfinder: SCHWARZ, Carsten, 10117 Berlin (DE); KOCH, Günter, 13125 Berlin (DE)
(74) Vertreter: Richardt Patentanwälte PartG mbB

(57) **Zusammenfassung**

Die Erfindung betrifft ein Verfahren zum Lesen zumindest eines in einem ID-Token (106, 106') gespeicherten Attributs unter Verwendung von ersten (136), zweiten (150) und dritten (100) Computersystemen, wobei das dritte Computersystem einen Browser (112) und einen Client (113) beinhaltet, und wobei dem zweiten Computersystem ein Dienst-Zertifikat (144) zugeordnet ist, wobei das Dienst-Zertifikat einen Identifikator beinhaltet, durch welchen das zweite Computersystem identifiziert wird, wobei der ID-Token einem Nutzer (102) zugeordnet ist, mit folgenden Schritten:
- Aufbau einer ersten kryptographisch gesicherten Verbindung (TLS1) zwischen dem Browser des dritten Computersystems und dem zweiten Computersystem, wobei das dritte Computersystem ein erstes Zertifikat (176) empfängt,
- Speicherung des ersten Zertifikats durch das dritte Computersystem,
- Empfang einer signierten Attributspezifizierung (182) durch das dritte Computersystem über die erste Verbindung,
- Aufbau einer zweiten kryptographisch gesicherten Verbindung (TLS2) zwischen dem Browser des dritten Computersystems und dem ersten Computersystem, wobei das dritte Computersystem ein zweites Zertifikat (190) empfängt,
- Weiterleitung der signierten Attributspezifizierung von dem dritten Computersystem über die zweite Verbindung an das erste Computersystem,
- Zugriff auf ein Berechtigungszertifikat (186) durch das erste Computersystem, wobei das Berechtigungszertifikat den Identifikator beinhaltet,
- Aufbau einer dritten kryptographisch gesicherten Verbindung (TLS3) zwischen dem ersten Computersystems und dem Client des dritten Computersystems, wobei das dritte Computersystem über die dritte Verbindung das Berechtigungszertifikat mit dem Identifikator empfängt,
- Prüfung durch den Client des dritten Computersystems, ob der Identifikator in dem ersten Zertifikat beinhaltet ist, als Nachweis dafür, dass das erste Zertifikat mit dem Dienst-Zertifikat übereinstimmt,
- Authentifizierung des Nutzers gegenüber dem ID-Token,
- Authentifizierung des ersten Computersystems (136) gegenüber dem ID-Token,
- Aufbau einer vierten kryptographisch gesicherten Verbindung mit Endezu-Ende Verschlüsselung zwischen dem ID-Token und dem ersten Computersystem,
- nach erfolgreicher Authentifizierung des Nutzers und des ersten Computersystems gegenüber dem ID-Token, Lesezugriff des ersten Computersystems auf das zumindest eine in dem ID-Token gespeicherte Attribut über die vierte Verbindung, um die in der Attributspezifizierung spezifizierten ein oder mehrere Attribute aus dem ID-Token auszulesen,
- Übertragung des zumindest einen Attributs nach dessen Signierung durch das erste Computersystem an das zweite Computersystem (150).

## Beschreibung

Die Erfindung betrifft ein Verfahren zum Lesen von zumindest einem Attribut aus einem ID-Token, ein Computerprogrammprodukt sowie ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Aus DE 10 2008 000 067 A1 ist ein Verfahren zum Lesen von zumindest einem Attribut aus einem ID-Token bekannt, von dem die vorliegende Erfindung als dem nächstkommenden Stand der Technik ausgeht. Weiterbildungen dieses Verfahrens sind in den Patentanmeldungen DE 10 2008 040 416, DE 10 2008 042 262, DE 10 2009 026 953, DE 10 2009 027 723 und DE10 2009 027 681 offenbart.

Der Erfindung liegt demgegenüber die Aufgabe zugrunde, ein verbessertes Verfahren zum Lesen zumindest eines Attributs zu schaffen, sowie ein entsprechendes Computerprogrammprodukt und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Verfahren zum Lesen zumindest eines in einem ID-Token gespeicherten Attributs geschaffen, wobei der ID-Token einem Nutzer zugeordnet ist. Das Verfahren beinhaltet die folgenden Schritte: Authentifizierung des Nutzers gegenüber dem ID-Token; Authentifizierung eines ersten Computersystems gegenüber dem ID-Token; nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs an ein zweites Computersystem. Hierdurch kann ein "Vertrauensanker" geschaffen werden.

Ausführungsformen der Erfindung ermöglichen das Lesen eines oder mehrerer der in einem ID-Token gespeicherten Attribute durch das erste Computersystem, wobei die Verbindung zwischen dem ID-Token und dem ersten Computersystem über ein Netzwerk, insbesondere das Internet, aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um diese Attribute an ein zweites Computersystem, zum Beispiel eines Online-Dienstes, weiterzuleiten.

Es kann aber zum Beispiel auch nur ein einzelnes Attribut gelesen werden, welches nicht zur Feststellung der Identität des Nutzers, sondern beispielsweise zur Überprüfung der Berechtigung des Benutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Zur Abwehr einer so genannten "Man in the Middle-Attacke" wird wie folgt vorgegangen:
Zunächst wird eine erste kryptografisch gesicherte Verbindung zwischen einem Browser eines dritten Computersystems und dem zweiten Computersystem aufgebaut, wobei das dritte Computersystem über die erste Verbindung ein erstes Zertifikat empfängt. Beispielsweise ist der Empfang des ersten Zertifikats für den Aufbau der ersten kryptografisch gesicherten Verbindung erforderlich. Das erste Zertifikat kann auch als Teil der Signatur der signierten Attributspezifizierung über die erste kryptografisch gesicherte Verbindung von dem dritten Computersystem empfangen werden. Das erste Zertifikat beinhaltet einen Identifikator des zweiten Computersystems.

Das über die erste kryptografisch gesicherte Verbindung empfangene erste Zertifikat wird durch das dritte Computersystem zumindest temporär für einen vorgegebenen Zeitraum gespeichert. Ferner wird eine zweite kryptografisch gesicherte Verbindung zwischen dem Browser des dritten Computersystems und dem ersten Computersystem aufgebaut und die signierte Attributspezifizierung wird über die zweite Verbindung von dem Browser an das erste Computersystem, beispielsweise über ein so genanntes Redirect, weitergeleitet.

Das erste Computersystem ist von dem Betreiber des zweiten Computersystems, durch welches ein Dienst angeboten wird, zur Durchführung der ID-Provider Funktion autorisiert. Hierzu sind in dem ersten Computersystem ein dem zweiten Computersystem zugeordnetes Berechtigungszertifikat sowie ggf. die Berechtigungszertifikate weiterer zweiter Computersysteme, die sich ebenfalls der ID-Provider Funktion des ersten Computersystems bedienen können, gespeichert, sowie auch die jeweils dazugehörenden privaten Schlüssel. Das dem zweiten Computersystem zugeordnete Berechtigungszertifikat beinhaltet dessen Identifikator.

Anhand der Signatur der Attributspezifizierung identifiziert das erste Computersystem das Berechtigungszertifikat desjenigen der zweiten Computersysteme, von dem die Attributspezifizierung signiert worden ist. Zwischen dem ersten Computersystem und dem Client des dritten Computersystems wird eine dritte kryptografisch gesicherte Verbindung aufgebaut, wobei der Client des dritten Computersystems über die dritte Verbindung das Berechtigungszertifikat von dem ersten Computersystem empfängt. Seitens des dritten Computersystems wird durch dessen Client dann geprüft, ob die Identifikatoren übereinstimmen. Zum Aufbau der dritten kryptografisch gesicherte Verbindung kann das Zertifikat des ersten Computersystems verwendet werden, um dann anschließend das Berechtigungszertifikat des identifizierten zweiten Computersystems über dieser dritte Verbindung zu übertragen, oder es kann das Berechtigungszertifikat des zweiten Computersystems für den Aufbau der dritten Verbindung verwendet werden, so dass hierbei das Berechtigungszertifikat übertragen wird.

Wenn dies der Fall ist, ist das ein Nachweis dafür, dass das erste Zertifikat mit dem Dienst-Zertifikat, welches dem zweiten Computersystem zugeordnet ist und mit Hilfe dessen die Attributspezifizierung signiert worden ist, und das Berechtigungszertifikat einander zugeordnet sind Dienst-Zertifikat, Liegt eine solche Zuordnung nicht vor, so deutet dies auf eine Man in the Middle-Attacke hin, sodass ein Abbruch erfolgt.

Wenn das erste Zertifikat und das Berechtigungszertifikat hingegen über die jeweiligen Identifikatoren einander zugeordnet sind, authentifiziert sich das erste Computersystem gegenüber dem ID-Token und es wird eine vierte kryptografisch gesicherte Verbindung mit Ende-Zu-Ende-Verschlüsselung zwischen dem ID-Token und dem ersten Computersystem aufgebaut. Wenn sich auch der Nutzer gegenüber dem ID-Token erfolgreich authentifiziert hat, kann dann der Lesezugriff des ersten Computersystems über die vierte Verbindung erfolgen.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen. Insbesondere kann es sich um ein SSL Zertifikat oder ein TLS-Zertifikat handeln.

Unter einem "Berechtigungszertifikat" wird hier ein Zertifikat verstanden, das eine Spezifizierung von Zugriffsrechten auf in dem ID-Token gespeicherte Attribute beinhaltet. Ein Berechtigungszertifikat kann einen Verweis auf ein oder mehrere Zertifikate, insbesondere SSL- oder TLS-Zertifikate, beinhalten, welche dem Berechtigungszertifikat zugeordnet sind.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Berechtigungszertifikat, welches zur Authentifizierung des ersten Computersystems gegenüber dem ID-Token verwendet wird. Das Berechtigungszertifikat beinhaltet eine Angabe derjenigen Attribute, für welche das erste Computersystem eine Leseberechtigung hat. Der ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann. Dieses Berechtigungszertifikat ist einem Dienst-Zertifikat des zweiten Computersystems zugeordnet, d.h. es beinhaltet denselben Identifikator wie das Dienst-Zertifikat. Wenn keine man-in-the-middle Attacke vorliegt, ist das erste Zertifikat, welches von dem dritten Computersystem beim Aufbau der ersten Verbindung empfangen wird, das Dienst-Zertifikat des zweiten Computersystems.

Nach einer Ausführungsform der Erfindung sendet das erste Computersystem das zumindest eine von dem ID-Token ausgelesene Attribut unmittelbar an das zweite Computersystem. Bei dem zweiten Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, von dem ersten Computersystem an das zweite Computersystem einer Bank übertragen werden.

Nach einer Ausführungsform der Erfindung erfolgt die Übertragung der aus dem ID-Token gelesenen Attribute von dem ersten Computersystem zunächst an ein drittes Computersystem des Nutzers. Beispielsweise hat das dritte Computersystem einen üblichen Browser, mit dem der Nutzer eine Webseite des zweiten Computersystems öffnen kann. Der Nutzer kann in die Webseite eine Anforderung oder Bestellung für einen Dienst oder ein Produkt eingeben.

Das zweite Computersystem spezifiziert daraufhin diejenigen Attribute, zum Beispiel des Nutzers oder seines ID-Tokens, welche es für die Erbringung des Dienstes oder die Annahme der Bestellung benötigt. Die entsprechende Attributspezifikation, die die Spezifizierung dieser Attribute beinhaltet, wird sodann von dem zweiten Computersystem über das dritte Computersystem an das erste Computersystem gesendet.

Nach einer Ausführungsform der Erfindung beinhaltet die Dienst-Anforderung des Nutzers an das zweite Computersystem die Angabe einer Kennung, wobei die Kennung das erste Computersystem identifiziert. Beispielsweise handelt es sich bei der Kennung um einen Link, beispielsweise eine URL des ersten Computersystems.

Nach einer Ausführungsform der Erfindung werden die aus dem ID-Token ausgelesenen Attribute von dem ersten Computersystem signiert und dann an das dritte Computersystem übertragen. Der Nutzer des dritten Computersystems kann die Attribute also lesen, ohne sie jedoch verändern zu können. Erst nach Freigabe durch den Nutzer werden die Attribute von dem dritten Computersystem an das zweite Computersystem weitergeleitet.

Nach einer Ausführungsform der Erfindung kann der Nutzer die Attribute vor deren Weiterleitung durch weitere Daten ergänzen.

Nach einer Ausführungsform der Erfindung hat das erste Computersystem mehrere Berechtigungszertifikate mit verschiedenen Leserechten. Aufgrund des Empfangs der Attributspezifikation wählt das erste Computersystem eines oder mehrere dieser Berechtigungszertifikate aus, um die entsprechenden Attribute aus dem ID-Token auszulesen.

Nach einer Ausführungsform der Erfindung handelt es sich bei den ersten, zweiten und dritten Verbindungen jeweils um Transport-Schichtverbindungen, die kryptografisch gesichert sind. Beispielsweise handelt es sich bei den ersten, zweiten und dritten Verbindungen jeweils um Transport-Layer-Security (TLS) oder Secure Sockets Layer (SSL)Verbindungen. Die vierte Verbindung mit Ende-Zu-Ende-Verschlüsselung zwischen dem ID-Token und dem ersten Computersystem wird hingegen auf einer höheren Schicht, wie z.B. einer Anwendungsschicht, unter Verwendung der dritten Verbindung aufgebaut.

Nach einer Ausführungsform der Erfindung erzeugt das zweite Computersystem ein Security Assurance Markup Language (SAML) Objekt, welches die Attributspezifikation und die Signatur des zweiten Computersystems beinhaltet. Das SAML Objekt wird über der erste Verbindung zu dem dritten Computersystem übertragen und durch den Redirect von dem dritten Computersystem an das erste Computersystem über die zweite Verbindung weitergeleitet. Das erste Computersystem beinhaltet eine SAML-Logik -Komponente, das heißt ein Computerprogramm zum Empfang und zur Verarbeitung von SAML-Objekten. Die zweite Verbindung wird bei dieser Ausführungsform zwischen dem Browser des dritten Computersystems und der SAML-Logik -Komponente des ersten Computersystems aufgebaut.

Nach einer Ausführungsform der Erfindung beinhaltet das erste Computersystem eine Protokoll-Stack-Komponente, das heißt ein Computerprogramm zur Durchführung eines vorgegebenen Protokoll-Stacks, wie zum Beispiel dem vom Bundesamt für Sicherheit in der Informationstechnik spezifizierten Protokoll-Stack TR03112. Die dritte Verbindung wird bei einer solchen Ausführungsform zwischen dem Client des dritten Computersystems und der Protokoll-Stack-Komponente des ersten Computersystems aufgebaut.

Nach einer Ausführungsform der Erfindung hat der Browsers des dritten Computersystems ein Plug-in-Programm. Durch das Plug-in-Programm wird die Weiterleitung der signierten Attributspezifizierung, beispielsweise des SAML-Objekts, über die zweite Verbindung implementiert sowie der Start des Clients und die Übergabe des über die erste Verbindung empfangenen ersten Zertifikats an den Client. In diesem Fall implementiert der Client die Prüfung, ob die Identifikatoren der Zertifikate übereinstimmen.

Nach einer Ausführungsform der Erfindung handelt es sich bei dem Dienst-Zertifikat des Dienstcomputersystems um ein SSL-Zertifikat. Das SSL-Zertifikat des Dienstcomputersystems beinhaltet den Identifikator, durch welchen das Dienstcomputersystem eindeutig identifiziert wird. Bei diesem Identifikator kann es sich um den öffentlichen Schlüssel des Dienstcomputersystems, einen Hashwert dieses öffentlichen Schlüssels oder einen anderen eindeutigen Identifikator handeln.

Wenn es sich bei der ersten kryptographisch gesicherten Verbindung um eine SSL-Verbindung handelt, so ist zum Aufbau dieser ersten Verbindung die Übertragung des Dienst-Zertifikats des Dienstcomputersystems, das heißt des zweiten Computersystems, an das Nutzer-Computersystem, das heißt das dritte Computersystem, erforderlich. Dieses Dienst-Zertifikat ist mit dem von dem Nutzer-Computersystem empfangenen ersten Zertifikat identisch, sofern keine "man-in-the-middle-Attacke" vorliegt. Das erste Zertifikat wird von dem Nutzer-Computersystem gespeichert.

Dem ID-Provider-Computersystem, das heißt dem ersten Computersystem, kann ein ID-Providerzertifikat zugeordnet sein. Bei dem ID-Providerzertifikat kann es sich ebenfalls um ein SSL-Zertifikat handeln. Das ID-Providerzertifikat beinhaltet einen Identifikator des ID-Provider-Computersystems, wie zum Beispiel dessen öffentlichen Schlüssel, einen Hashwert von dessen öffentlichen Schlüssel oder einen anderen eindeutigen Identifikator, durch den das ID-Provider-Computersystem, das heißt das erste Computersystem, identifiziert wird.

Wenn es sich bei der zweiten kryptographisch gesicherten Verbindung um eine TLS-Verbindung handelt, so ist für deren Aufbau die Übertragung des ID-Providerzertifikats von dem ID-Provider-Computersystem an das Nutzer-Computersystem erforderlich. Das zweite Zertifikat, welches das Nutzer-Computersystem empfängt, ist mit dem ID-Providerzertifikat identisch, wenn keine man-in-the-middle Attacke vorliegt.

Das Nutzer-Computersystem speichert auch das zweite Zertifikat, d.h. im Normalfall das ID-Providerzertifikat, ab.

Nach einer Ausführungsform der Erfindung sind in dem Berechtigungszertifikat des ID-Provider-Computersystems sowohl der Identifikator des Dienstcomputersystems als auch der Identifikator des ID-Provider-Computersystems beinhaltet. Wenn hinsichtlich des Aufbaus der zweiten kryptographisch gesicherten Verbindung keine "man-in-the-middie-Attacke" vorliegt, so ist das zweite Zertifikat, welches von dem Nutzer-Computersystem empfangen wird, das ID-Providerzertifikat. Das Vorliegen von man-in-the-middle-Attacken kann daher durch das Nutzer-Computersystem dann ausgeschlossen werden, wenn der Identifikator des ersten Zertifikats in dem Berechtigungszertifikat vorhanden ist und auch der Identifikator des zweiten Zertifikats ebenfalls in dem Berechtigungszertifikat angegeben ist.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

Nach einer Ausführungsform der Erfindung hat der ID-Token einen geschützten Speicherbereich zur Speicherung von zumindest einem Attribut, Mittel zur Authentifizierung des dem ID-Token zugeordneten Nutzers gegenüber dem ID-Token, Mittel zur Authentifizierung des ersten Computersystems gegenüber dem ID-Token, Mittel zum Aufbau der vierten Verbindung zu dem ersten Computersystem, über die das erste Computersystem das zumindest eine Attribut auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die vierte Verbindung zwischen dem ID-Token und dem ersten Computersystem über das dritte Computersystem des Nutzers aufzubauen, da der Nutzer aufgrund der Ende-zu-Ende-Verschlüsselung keine Änderungen der über die Verbindung übertragenen Daten vornehmen kann.

Nach einer Ausführungsform der Erfindung hat das erste Computersystem Mittel zum Empfang einer Attributspezifikation über ein Netzwerk, wobei die Attributspezifikation zumindest ein Attribut spezifiziert, Mittel zur Authentifizierung gegenüber einem ID-Token, Mittel zum Lesen zumindest eines Attributs aus dem ID-Token über eine gesicherte vierte Verbindung, wobei das Lesen des zumindest einen Attributs voraussetzt, dass sich ein dem ID-Token zugeordneter Nutzer gegenüber dem ID-Token authentifiziert hat.

Nach einer Ausführungsform der Erfindung kann das erste Computersystem Mittel zur Generierung einer Aufforderung an den Benutzer beinhalten. Nachdem das erste Computersystem die Attributspezifikation beispielsweise von dem zweiten Computersystem empfangen hat, sendet es daraufhin eine Aufforderung an das dritte Computersystem des Nutzers, sodass der Nutzer dazu aufgefordert wird, sich gegenüber dem ID-Token zu authentifizieren. Nachdem die Authentifizierung des Nutzers gegenüber dem ID-Token erfolgreich durchgeführt worden ist, erhält das erste Computersystem von dem dritten Computersystem eine Bestätigung. Daraufhin authentifiziert sich das erste Computersystem gegenüber dem ID-Token und es wird die sichere vierte Verbindung zwischen dem ID-Token und dem ersten Computersystem mit einer Ende-zu-Ende-Verschlüsselung aufgebaut.

Nach einer Ausführungsform der Erfindung hat das erste Computersystem mehrere Berechtigungszertifikate, die jeweils unterschiedliche Leserechte spezifizieren. Nach Empfang der Attributspezifikation wählt das erste Computersystem zumindest eines dieser Berechtigungszertifikate mit den zum Lesen der spezifizierten Attribute ausreichenden Leserechten.

Ausführungsformen des erfindungsgemäßen ersten Computersystems sind besonders vorteilhaft, da sie in Kombination mit der Notwendigkeit der Authentifizierung des Nutzers gegenüber dem ID-Token und der zuverlässigen Abwehr von "man-in-the-middle-Attacken" einen Vertrauensanker für die unverfälschte digitale Identität des Nutzers bilden. Hierbei ist von besonderem Vorteil, dass dies keine vorherige Registrierung des Nutzers gegenüber dem Computersystem erfordert sowie auch keine zentrale Speicherung der die digitalen Identitäten bildenden Attribute der Nutzer.

Nach einer Ausführungsform der Erfindung handelt es sich bei dem ersten Computersystem um ein behördlich zertifiziertes Trust-Center, insbesondere ein Signaturgesetz-konformes Trust-Center.

Nach Ausführungsformen der Erfindung sind die verschiedenen funktionellen Mittel der Computersysteme durch ausführbare Programminstruktionen, eine Kombination von Hard- und Softwarekomponenten und/oder durch elektronische LogikSchaltungen implementiert.

Im Weiteren werden Ausführungsformen der Erfindung mit Bezugnahme auf die Zeichnungen näher erläutert. Es zeigen:
- Figur 1: ein Blockdiagramm einer ersten Ausführungsform erfindungsgemäßer Computersysteme,
- Figur 2: ein Flussdiagramm einer Ausführungsform eines erfindungsgemäßen Verfahrens,
- Figur 3: ein UML-Diagramm einer weiteren Ausführungsform eines erfindungsgemäßen Verfahrens.

Elemente der nachfolgenden Ausführungsformen, die einander entsprechen, werden mit denselben Bezugszeichen gekennzeichnet.

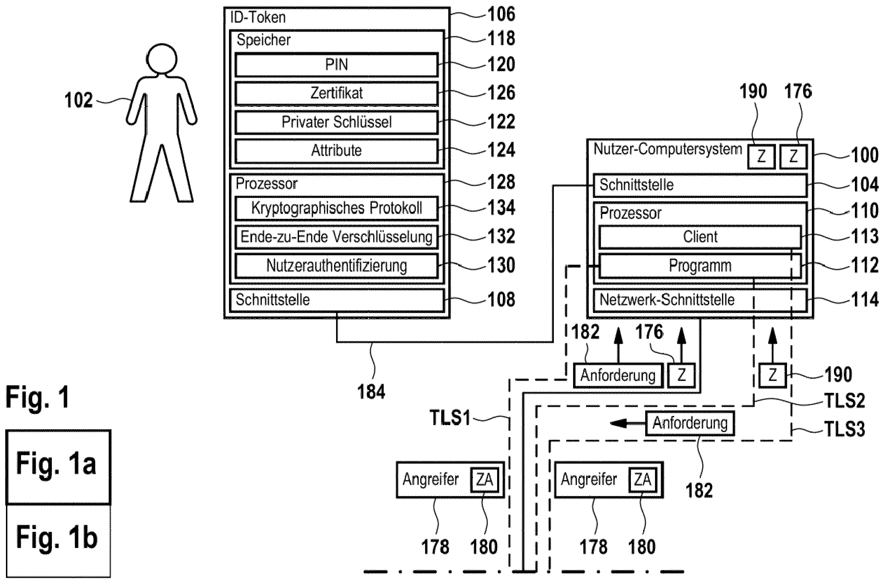

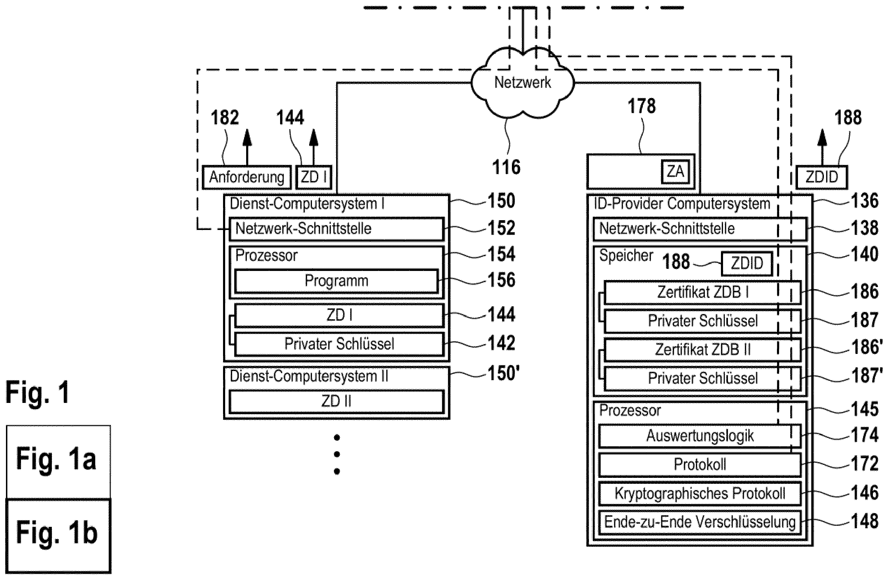

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist. Bei den Schnittstellen 104 und 108 kann es sich z.B. um Near Field Communication (NFC), Bluetooth, RFID-Schnittstellen oder dergleichen handeln.

Das Nutzer-Computersystem 100 hat zumindest einen Prozessor 110 zur Ausführung von Programminstruktionen 112 und 113 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Durch die Programminstruktionen 112 wird ein Browser, wie z.B. Microsoft Internet Explorer oder ein anderes übliches Browserprogramm implementiert. Die Programminstruktionen 112 können ein sogenanntes Plug-in für den Browser beinhalten.

Durch die Programminstruktionen 113 wird ein Client implementiert. Der entsprechende Server wird durch eine Protokoll-Stack-Komponente 172 des ID-Provider-Computersystems 136 gebildet.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich zur Speicherung eines Zertifikats 126 aufweisen. Das Zertifikat 126 beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat 126 muss nicht zwangsläufig in dem elektronischen Speicher 118 des ID-Tokens 106 gespeichert sein. Alternativ oder zusätzlich kann das Zertifikat 126 auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein oder mehrere Berechtigungszertifikate und die dazugehörigen privaten Schlüssel gespeichert sind. Jedes der Zertifikate ist einem der Dienst-Computersysteme zugeordnet.

Beispielsweise sind verschiedene Dienst-Computersysteme, wie z.B. das Dienst-Computersystem I 150, das Dienst-Computersystem II 150` ... angeschlossen. Das Dienst-Computersystem I wird durch das dem Betreiber des Dienst-Computersystems I zugeordnete Zertifikat ZD I identifiziert. Entsprechend wird das Dienst-Computersystem II durch das dem Betreiber des Dienst-Computersystems II zugeordnete Zertifikat ZD II identifiziert. Die Betreiber dieser Dienst-Computersysteme haben den Betreiber des ID-Provider-Computersystems 136 dazu autorisiert, die ID-Provider-Funktion für diese Dienst-Computersysteme wahrzunehmen.

Dementsprechend sind in dem Speicher 140 des ID-Provider-Computersystems 136 das Berechtigungszertifikate ZDB I 186 mit dem dazugehörigen privaten Schlüssel 187 sowie das Berechtigungszertifikate ZDB II 186' und der dazugehörige private Schlüssel 187` sowie ggf. die Berechtigungszertifikate und privaten Schlüssel für weitere Dienst-Computersysteme gespeichert. Ferner ist in dem Speicher 140 ein ID-Provider Zertifikat ZDID 188 gespeichert.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Der Prozessor 145 stellt ferner eine Auswertungslogik 174 und eine Protokoll-Stack-Komponente 172 zur Verfügung. Bei der Auswertungslogik 174 kann es sich um ein Programmmodul handeln, das eine SAML-Logik-Komponente bildet, um ein SAML-Objekt zu empfangen und auszuwerten. Bei der Protokoll-Stack-Komponente 172 kann es sich um ein Programmmodul zur Implementierung eines Kommunikationsprotokolls handeln, wie zum Beispiel nach der technischen Richtlinie des Bundesamts für Sicherheit in der Informationstechnik, BSI TR-03112-7. In dem Speicher 140 des ID-Provider-Computersystems 136 sind die verschiedenen Berechtigungszertifikate für diejenigen Dienst-Computersysteme gespeichert, welch das ID-Provider-Computersystem 136 zur Erbringung der ID-Provider-Funktion autorisiert haben, d.h. hier die Berechtigungszertifikate ZDB I , ZDB II sowie die jeweils dazu gehörenden privaten Schlüssel 187 bzw. 187`.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereit gehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Vorzugsweise sind die Computersysteme gemäß Figur 1 so ausgebildet, dass das Dienst-Zertifikat 144 einen Identifikator des betreffenden Dienst-Computersystems beinhaltet. Beispielsweise wird also durch den Identifikator des Zertifikats ZDI das Dienst-Computersystem I identifiziert. Entsprechend beinhaltet das ID-ProviderZertifikat ZDID 188 einen Identifikator, durch den das ID-Provider-Computersystem 136 eindeutig identifiziert wird. Das dem Dienst-Computersystem I zugeordnete Berechtigungszertifikat 186 beinhaltet dementsprechend den Identifikator des Dienst-Computersystems I und den Identifikator des ID-Provider-Computersystems.

Zur Inanspruchnahme des von dem Dienst-Computersystem 150 zur Verfügung gestellten Dienstes wird wie folgt vorgegangen:
1. Der Nutzer 102 startet die Ausführung der Programminstruktionen 112, beispielsweise ein übliches Webbrowser-Programm, wie zum Beispiel Microsoft Internet Explorer. Über das Netzwerk 116, d.h. beispielsweise das Internet, wählt der Nutzer 102 eines der Dienst-Computersysteme aus. Ohne Beschränkung der Allgemeinheit wird im Folgenden davon ausgegangen, dass der Nutzer 102 das Dienst-Computersystem I auswählt. Auf der Webseite des Dienst-Computersystems I wählt der Nutzer 102 einen bestimmten, von dem Dienst-Computersystem 1 angebotenen Dienst aus. Daraufhin wird eine erste kryptografisch gesicherte Verbindung TLS1 zwischen dem Dienst-Computersystem I und dem Browser 112 aufgebaut. Hierzu kann das Transport Layer Security (TLS)-Protokoll verwendet werden. Für den Aufbau der ersten kryptografisch gesicherten Verbindung TLS1 überträgt das Dienst-Computersystem I im Rahmen der Ausführung des TLS-Protokolls sein Zertifikat ZD I 144 an das Nutzer-Computersystem 100. Beispielsweise beinhaltet das Berechtigungszertifikat ZDB I 186 einen Verweis auf das Zertifikat ZD I 144, welches insbesondere als TLS-Zertifikat ausgebildet sein kann. Das Nutzer-Computersystem 100 empfängt also ein erstes Zertifikat Z 176. Bei diesem Zertifikat Z 176 handelt es sich im Normalfall um das Zertifikat ZD I 144 des Dienst-Computersystems I. Bei einer sogenannten Man in the Middle-Attacke durch einen Angreifer 178 kann jedoch das Zertifikat ZD I 144 von dem Angreifer 178 durch dessen Zertifikat ZA 180 ausgetauscht werden, sodass das Nutzer-Computersystem 100 dann das Zertifikat ZA 180 als Zertifikat Z 176 abspeichert.

Nach dem Aufbau der Verbindung TLS1 sendet das Dienst-Computersystem I eine Attributspezifizierung 182 über TLS1 an den Browser 112 des Nutzer-Computersystems 100. Die Attributspezifizierung 182 beinhaltet eine Spezifizierung derjenigen Attribute des ID-Tokens 106, deren Kenntnis das Dienst-Computersystem I benötigt, um den von dem Nutzer 102 gewünschten Dienst erbringen zu können. Diese Attributspezifizierung 182 ist eine Anforderung des Dienst-Computersystems I an das ID-Provider-Computersystem 136 zum sicheren Lesen dieser Attribute. Die Attributspezifizierung 182 ist von dem Dienst-Computersystem I mit Hilfe des privaten Schlüssels 142 signiert. Zu der Signatur gehört auch das Zertifikat ZD I. Der Angreifer 178 kann versuchen, die Signatur der Anforderung 182 zu manipulieren, indem er das Zertifikat ZD I gegen das Zertifikat ZA austauscht.

Die Attributspezifizierung 182 kann die Form eines sogenannten SAML-Objekts haben. Aufgrund des Empfangs des SAML-Objekts 182 wird ein Plug-in-Programm des Browsers 112 angesprochen. Daraufhin wird eine zweite kryptografisch gesicherte Verbindung TLS2 zwischen dem Browser 112 und der Auswertungslogik 174 des ID-Provider-Computersystems 136 über das Netzwerk 116 aufgebaut, beispielsweise ebenfalls nach dem TLS-Protokoll. Hierzu wird das ID-Provider Zertifikat ZDID 188 an das Nutzer-Computersystem 100 gesendet und dort als zweites Zertifikat 190 empfangen, welches mit ZDID 188 identisch ist, sofern es nicht aufgrund einer man-in-the-middle Attacke durch das Zertifikat ZA eines Angreifers 180 ersetzt worden ist. Das Zertifikat 190 wird durch das Nutzer-Computersystem 100 gespeichert. Ferner werden die Programminstruktionen 113 (Client) gestartet.

2. Die signierte Anforderung 182 wird über einen sogenannten Redirect von dem Browser 112 über die Verbindung TLS2 an die Auswertungslogik 174 weitergeleitet. Das ID-Provider-Computersystem 136 wertet die Anforderung 182 mit Hilfe der Auswertungslogik 174 aus. Dadurch identifiziert das ID-Provider-Computersystem 136 dasjenige Dienst-Computersystem, d.h. hier das Dienst-Computersystem I, von dem die Anforderung 182 abgesendet worden ist. Dies kann mit Hilfe der Signatur der Anforderung 182 oder mit Hilfe eines anderen, in der Anforderung 182 beinhalteten Identifikators des Dienst-Computersystems I erfolgen. Damit das ID-Provider-Computersystem 136 die angeforderte ID-Provider-Funktion erbringen kann, muss in dem Speicher 140 ein Berechtigungszertifikat mit dem dazugehörigen privaten Schlüssel verfügbar sein, das zu der festgestellten Identität des anfordernden Dienst-Computersystems, hier des Dienst-Computersystems I, passt. Kann ein solches Berechtigungszertifikat nicht gefunden werden, so wird der Ablauf an dieser Stelle abgebrochen.

Nach einer erfolgreichen Identifikation des Dienst-Computersystems 1 wählt also hier die Auswertungslogik 174 das Zertifikat ZDB I aus dem Speicher 140 für das weitere Vorgehen aus. Auch bei der Übertragung der Anforderung 182 über TLS2 kann es zu einer Man in the Middle-Attacke kommen, wie zum Beispiel wiederum durch den Angreifer 178, der versuchen kann, die Signatur der Anforderung 182 mit Hilfe seines Zertifikats ZA zu manipulieren.

3. Es wird dann eine dritte kryptografisch gesicherte Verbindung TLS3, beispielsweise wiederum nach dem TLS-Protokoll, zwischen der Protokoll-Stack-Komponente 172 und dem Client 113 aufgebaut. Im Rahmen des Aufbaus der dritten Verbindung TLS 3 überträgt das ID-Provider-Computersystem 136 das Berechtigungszertifikat des identifizierten Dienst-Computersystems, hier das Zertifikat ZDB I 186 des identifizierten Dienst-Computersystems I, an den Client 113. Der Client 113 prüft dann, ob das über die Verbindung TLS3 empfangene Berechtigungszertifikat, hier das Zertifikat ZDB I, mit den gespeicherten Zertifikaten 176 und 190 übereinstimmt. Zum Aufbau der gesicherte Verbindung TLS3 kann das ID-Provider Zertifikat verwendet werden, um dann anschließend das Berechtigungszertifikat des identifizierten Dienst-Computersystems über TLS3 zu übertragen, oder es kann das Berechtigungszertifikat des identifizierten Dienst-Computersystems für den Aufbau der gesicherte Verbindung TLS3 verwendet werden, so dass hierbei das Berechtigungszertifikat übertragen wird.

Hierzu wird geprüft, ob die Zertifikate 176 und 190 die Identifikatoren des empfangenen Berechtigungszertifikats beinhalten. Wenn dies nicht der Fall ist, so deutet dies auf das Vorliegen einer Man in the Middle-Attacke hin, und der weitere Ablauf wird abgebrochen. Wenn hingegen eine Übereinstimmung vorliegt, so kann weiter fortgefahren werden.

4. Authentifizierung des Nutzers 102 gegenüber dem ID-Token 106.

Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.

5. Authentifizierung des ID-Provider-Computersystems 136 gegenüber dem ID-Token 106.

Hierzu wird eine vierte Verbindung 184 zwischen dem ID-Token 106 und dem ID-Provider-Computersystem 136 über das Nutzer-Computersystem 100 und das Netzwerk 116 hergestellt. Die vierte Verbindung 184 wird auf einer höheren Ebene (Layer) des OSI-Schichtmodells als die Verbindung TLS3 aufgebaut. Als Transport-Layer werden für die vierte Verbindung die dritte Verbindung TLS3 sowie die Kommunikation zwischen den Schnittstellen 108 und 104 verwendet. Über die vierte Verbindung 184 wird das Berechtigungszertifikat des von dem ID-Provider-Computersystem 136 identifizierten Dienst-Computersystems, d.h. hier ZDB I, an den ID-Token 106 übertragen. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung 184 an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung 184 an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.

6. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.

Diese Attribute werden von dem ID-Provider-Computersystem mit Hilfe des Berechtigungszertifikats ZDB I 186 in Vertretung des Dienst-Computersystems I 150 signiert und über das Nutzer-Computersystem 100 oder direkt an das Dienst-Computersystem 150 übertragen. Dadurch wird das Dienst-Computersystem 150 über die aus dem ID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Benutzer 102 angeforderten Dienst zu erbringen.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von weiterem besonderem Vorteil ist der Schutz gegen Man in the Middle-Attacken, insbesondere aufgrund der Prüfung des Clients 113, ob das Zertifikat 176 bzw. 190 mit dem nachfolgend anlässlich des Aufbaus der dritten Verbindung TLS3 empfangenen Berechtigungszertifikat übereinstimmt. Hierdurch können die verschiedenen möglichen Man in the Middle-Attacken, zum Beispiel des Angreifers 178, wirksam abgewehrt werden.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

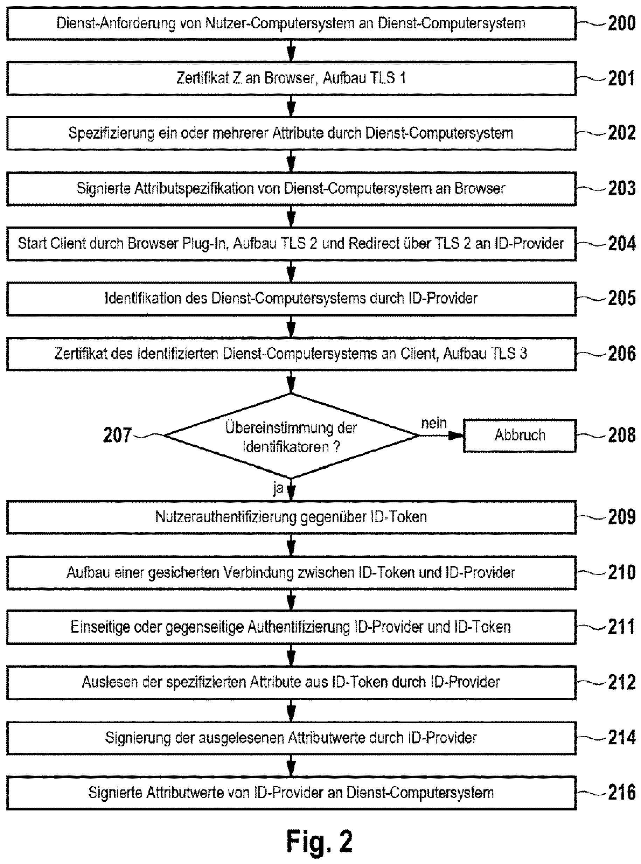

Die Figur 2 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Bestellung oder Auftragserteilung für einen Dienst oder ein Produkt.

In dem Schritt 201 wird die erste Verbindung TLS1 aufgebaut. Hierzu wird das Zertifikat des Dienst-Computersystems an das Nutzer-Computersystem kommuniziert. Das Nutzer-Computersystem erhält so Kenntnis von dem Zertifikat des Dienst-Computersystems, welches allerdings aufgrund einer Man in the Middle-Attacke von einem Angreifer durch ein Angreifer-Zertifikat ZA ersetzt worden sein kann. Das Zertifikat des Dienst-Computersystems oder das des Angreifers wird dann von dem Nutzer-Computersystem gespeichert.

In dem Schritt 202 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden. Diese Attributspezifizierung wird von dem Dienst-Computersystem signiert.

In dem Schritt 203 wird die signierte Attributspezifikation, d.h. die in dem Schritt 202 erfolgte Spezifizierung der ein oder mehreren der Attribute, von dem Dienst-Computersystem an das ID-Provider-Computersystem übertragen, und zwar über die Verbindung TLS1, und von dessen Browser empfangen.

Durch ein Plug-in-Programm des Browsers wird dann der Client des Nutzer-Computersystems gestartet. Ferner wird die zweite Verbindung TLS2 zwischen dem Browser und der Auswertungslogik des ID-Provider-Computersystems aufgebaut und die signierte Anforderung durch einen sogenannten Redirect des Browsers über die zweite Verbindung TLS2 an das ID-Provider-Computersystem, d.h. dessen Auswertungslogik, weitergeleitet. Zum Aufbau der zweite Verbindung TLS2 wird das ID-Provider Zertifikat an das Nutzer-Computersystem gesendet und das von dem Nutzer-Computersystem daraufhin empfangene zweite Zertifikat gespeichert. In dem Schritt 205 wird seitens des ID-Provider-Computersystems das Dienst-Computersystem, von welchem die signierte Anforderung stammt, identifiziert. Dies kann dadurch erfolgen, dass die Validität der Signatur der Anforderung seitens des ID-Provider-Computersystems geprüft wird, und wenn die Signatur valide ist, das Zertifikat der Signatur zur Identifizierung des Dienst-Computersystems verwendet wird. In dem Schritt 206 wird dann die dritte Verbindung TLS3 zwischen der Protokoll-Stack-Komponente und dem Client aufgebaut. Dabei wird das Berechtigungszertifikat des ggf. von dem ID-Provider-Computersystem identifizierten Dienst-Computersystem an den Client übertragen.

In dem Schritt 207 prüft der Client des Nutzer-Computersystems 100 dann, ob die Identifikatoren der gespeicherten ersten und zweiten Zertifikate mit dem bei Aufbau der dritten Verbindung TLS3 empfangenen Berechtigungszertifikat des identifizierten Dienst-Computersystems übereinstimmt. Wenn dies nicht der Fall ist, so erfolgt in dem Schritt 208 ein Abbruch, da eine Man in the Middle-Attacke vorliegt. Im gegenteiligen Fall authentifiziert sich der Nutzer in dem Schritt 209 gegenüber dem ID-Token, um dem ID-Provider-Computersystem die Möglichkeit zu geben, Attribute aus dem ID-Token auszulesen.

In dem Schritt 210 wird die vierte Verbindung zwischen dem ID-Token und dem ID-Provider-Computersystem aufgebaut. Hierbei handelt es sich um eine gesicherte Verbindung, beispielsweise nach einem so genannten Secure Messaging-Verfahren.

In dem Schritt 211 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

Die ausgelesenen Attributwerte werden in dem Schritt 214 von dem ID-Provider-Computersystem signiert. In dem Schritt 216 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

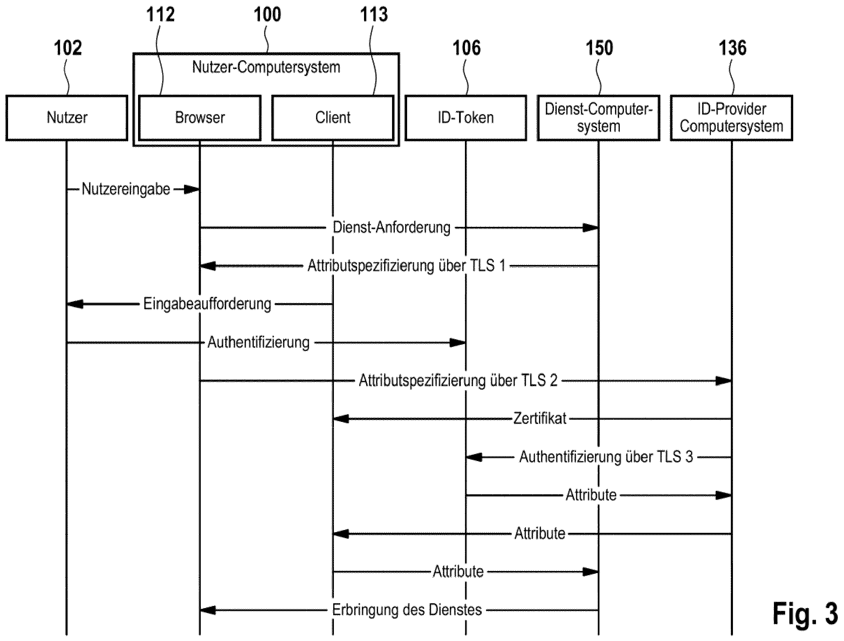

Die Figur 3 zeigt eine weitere Ausführungsform eines erfindungsgemäßen Verfahrens. Durch eine Nutzereingabe eines Nutzers 102 in ein Nutzer-Computersystem 100, d.h. beispielsweise den Browser 112, spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem Nutzer-Computersystem 100 an das Dienst-Computersystem 150 übertragen.

Das Dienst-Computersystem 150 antwortet auf die Dienst-Anforderung mit einer signierten Attributspezifizierung, d.h. beispielsweise einer Liste von Attributnamen in der Form eines SAML-Objekts, die über TLS1 an den Browser 112 übertragen wird. Anlässlich des Aufbaus von TLS1 empfängt der Browser 112 ein Zertifikat 176, welches temporär gespeichert wird. Beispielsweise nach Empfang der Attributspezifizierung fordert das Nutzer-Computersystem 100 den Nutzer 102, beispielsweise durch eine Eingabeaufforderung, zur Authentifizierung gegenüber dem ID-Token 106 auf. Diese Aufforderung kann durch ein Plug-in des Browsers 112 oder durch einen Client 113 des Nutzer-Computersystems 100 erfolgen.

Der Nutzer 102 authentifiziert sich daraufhin gegenüber dem ID-Token 106, beispielsweise durch Eingabe seiner PIN. Nach erfolgreicher Authentifizierung wird die signierte Attributspezifizierung von dem Nutzer-Computersystem 100 an ein ID-Provider-Computersystem 136 durch ein sog. Redirect des Browsers 112 weitergeleitet und zwar über TLS2.

Das ID-Provider-Computersystem 136 identifiziert das Dienst-Computersystem 150 anhand der signierten Attributspezifizierung und baut dann die Verbindung TLS3 zu dem Client 113 des Nutzer-Computersystems auf, beispielsweise unter Verwendung eines BSI TR-03112 konformen Protokolls. Dabei wird das Berechtigungszertifikat des identifizierten Dienst-Computersystems 150 an den Client 113 übertragen. Der Client 113 empfängt von dem Browser 112 ferner das anlässlich des Aufbaus von TLS1 empfangene Zertifikat 176 und vergleicht die beiden Zertifikate miteinander. Falls die Identifikatoren der beiden Zertifikate übereinstimmen, wird in dem Ablauf weiter fortgeschritten, indem dann eine Authentifizierung des ID-Provider-Computersystems über die dritte Verbindung und die Schnittstellen des Nutzer-Computersystems und des ID-Tokens (vgl. Schnittstellen 104 und 108 in der Ausführungsform der Figur 1) erfolgt, wonach die vierte Verbindung mit Ende-zu-Ende-Verschlüsselung aufgebaut wird. Das ID-Provider-Computersystem 136 richtet dann eine Leseanforderung zum Lesen der Attribute gemäß der Attributspezifizierung an den ID-Token 106 über die vierte Verbindung.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen. Das ID-Provider-Computersystem 136 signiert die Attribute und sendet die signierten Attribute an das Nutzer-Computersystem 100. Nach Freigabe durch den Nutzer 102 werden die signierten Attribute dann an das Dienst-Computersystem 150 übertragen, welches dann ggf. den gewünschten Dienst erbringen kann.

Ausführungsformen der Erfindung umfassen beispielsweise die folgenden Merkmale
1. Verfahren zum Lesen zumindest eines in einem ID-Token (106, 106') gespeicherten Attributs unter Verwendung von ersten (136), zweiten (150) und dritten (100) Computersystemen, wobei das dritte Computersystem einen Browser (112) und einen Client (113) beinhaltet, und wobei dem zweiten Computersystem ein Dienst-Zertifikat (144) zugeordnet ist, wobei das Dienst-Zertifikat einen Identifikator beinhaltet, durch welchen das zweite Computersystem identifiziert wird, wobei der ID-Token einem Nutzer (102) zugeordnet ist, mit folgenden Schritten:
   - Aufbau einer ersten kryptographisch gesicherten Verbindung (TLS1) zwischen dem Browser des dritten Computersystems und dem zweiten Computersystem, wobei das dritte Computersystem ein erstes Zertifikat (176) empfängt,
   - Speicherung des ersten Zertifikats durch das dritte Computersystem,
   - Empfang einer signierten Attributspezifizierung (182) durch das dritte Computersystem über die erste Verbindung,
   - Aufbau einer zweiten kryptographisch gesicherten Verbindung (TLS2) zwischen dem Browser des dritten Computersystems und dem ersten Computersystem, wobei das dritte Computersystem ein zweites Zertifikat (190) empfängt,
   - Weiterleitung der signierten Attributspezifizierung von dem dritten Computersystem über die zweite Verbindung an das erste Computersystem,
   - Zugriff auf ein Berechtigungszertifikat (186) durch das erste Computersystem, wobei das Berechtigungszertifikat den Identifikator beinhaltet,
   - Aufbau einer dritten kryptographisch gesicherten Verbindung (TLS3) zwischen dem ersten Computersystems und dem Client des dritten Computersystems, wobei das dritte Computersystem über die dritte Verbindung das Berechtigungszertifikat mit dem Identifikator empfängt,
   - Prüfung durch den Client des dritten Computersystems, ob der Identifikator in dem ersten Zertifikat beinhaltet ist, als Nachweis dafür, dass das erste Zertifikat mit dem Dienst-Zertifikat übereinstimmt,
   - Authentifizierung des Nutzers gegenüber dem ID-Token,
   - Authentifizierung des ersten Computersystems (136) gegenüber dem ID-Token,
   - Aufbau einer vierten kryptographisch gesicherten Verbindung mit Ende-zu-Ende Verschlüsselung zwischen dem ID-Token und dem ersten Computersystem,
   - nach erfolgreicher Authentifizierung des Nutzers und des ersten Computersystems gegenüber dem ID-Token, Lesezugriff des ersten Computersystems auf das zumindest eine in dem ID-Token gespeicherte Attribut über die vierte Verbindung, um die in der Attributspezifizierung spezifizierten ein oder mehrere Attribute aus dem ID-Token auszulesen,
   - Übertragung des zumindest einen Attributs nach dessen Signierung durch das erste Computersystem an das zweite Computersystem (150).
2. Verfahren nach Anspruch 1, wobei die Authentifizierung des ersten Computersystems gegenüber dem ID-Token mit Hilfe des Berechtigungszertifikats erfolgt, wobei das Berechtigungszertifikat eine Angabe derjenigen in dem ID-Token gespeicherten Attribute beinhaltet, für welche das erste Computersystem für den Lesezugriff berechtigt ist.
3. Verfahren nach Anspruch 2, wobei der ID-Token die Leseberechtigung des ersten Computersystems für den Lesezugriff auf zumindest eines der Attribute mit Hilfe des Berechtigungszertifikats überprüft.
4. Verfahren nach einem der Ansprüche 1, 2 oder 3, wobei es sich bei den ersten, zweiten und dritten Verbindungen jeweils um Transport-Schicht Verbindungen handelt und wobei die vierte Verbindung über die dritte Verbindung aufgebaut wird.
5. Verfahren nach einem der vorhergehenden Ansprüche, wobei die signierte Attributsspezifizierung als SAML-Objekt empfangen wird und wobei das erste Computersystem eine SAML-Logik-Komponente (174) aufweist, zu der die zweite Verbindung aufgebaut wird, über die die SAML-Logik-Komponente das SAML-Objekt empfängt.
6. Verfahren nach Anspruch 5, wobei das erste Computersystem eine Protokoll-Stack-Komponente (172) beinhaltet, zu der die dritte Verbindung aufgebaut wird.
7. Verfahren nach einem der vorhergehenden Ansprüche, wobei dem ersten Computersystem eine ID-Provider Zertifikat (188) zugeordnet ist, das einen Identifikator des ersten Computersystems beinhaltet, wobei das ID-Provider Zertifikat (188) für den Aufbau der zweiten kryptographisch gesicherten Verbindung verwendet wird, und das daraufhin von dem ersten Computersystem empfangene zweite Zertifikat gespeichert wird, und wobei das Berechtigungszeritifkat sowohl den Identifikator des ersten Computersystems als auch den Identifikator des zweiten Computersystems beinhaltet, wobei durch den Client des dritten Computersystems geprüft wird, ob ein Identifikator des ersten Zertifikats (176) und ein Identifikator des zweiten Zertifikats (176) in dem Berechtigungszertifikat beinhaltet sind, und wobei die vierte kryptographisch gesicherte Verbindung nur dann aufgebaut wird, wenn der Identifikator des ersten Zertifikats und der Identifikator des zweiten Zertifikats in dem Berechtigungszertifikat beinhaltet sind.
8. Verfahren nach einem der vorhergehenden Ansprüche, mit dem Schritt der Identifizierung des Berechtigungszertifikats anhand der Attributspezifizierung.
9. Computerprogrammprodukt mit von einem Computersystem ausführbaren Instruktionen zur Durchführung eines Verfahrens nach einem der vorhergehenden Ansprüche.
10. Computersystem mit
   - einem Browser (112) und einem Client (110),
   - Mitteln (110, 112, 114) zum Aufbau einer ersten kryptografischen gesicherten Verbindung (TLS1) zwischen dem Browser und einem zweiten Computersystem (150) zum Empfang eines ersten Zertifikats (176) und einer signierten Attributspezifizierung (182), wobei das erste Zertifikat einen Identifikator beinhaltet,
   - Mitteln (100) zur Speicherung des ersten Zertifikats,
   - Mitteln (110, 112, 114) zum Aufbau einer zweiten kryptografischen gesicherten Verbindung (TLS2) zwischen dem Browser und einem ersten Computersystem (136) mit Hilfe eines zweiten Zertifikats (190), wobei das zweite Zertifikat einen weiteren Identifikator beinhaltet,
   - Mitteln (112) zur Weiterleitung der über die erste Verbindung empfangenen signierten Attributspezifizierung über die zweite Verbindung,
   - Mitteln (110, 112, 113, 114) zum Aufbau einer dritten kryptografischen gesicherten Verbindung (TLS3) zwischen dem Client und dem ersten Computersystem, wobei ein Berechtigungszertifikat (186) empfangen wird, wobei das Berechtigungszertifikat die Identifikatoren der ersten und zweiten Computersysteme beinhaltet,
   - Mitteln zur Prüfung, ob die Identifikatoren des Berechtigungszertifikats mit den Identifikatoren der ersten und zweiten Zertifikate übereinstimmen,
   - Mitteln zum Aufbau einer vierten kryptographisch gesicherten Verbindung mit Ende-zu-Ende Verschlüsselung zwischen einem ID-Token (106) und dem ersten Computersystem, um nach erfolgreicher Authentifizierung des Nutzers und des ersten Computersystems gegenüber dem ID-Token einen Lesezugriff des ersten Computersystems auf das zumindest eine in dem ID-Token gespeicherte Attribut über die vierte Verbindung zu ermöglichen.
11. Computersystem nach Anspruch 10, wobei die Mittel zur Weiterleitung der signierten Attributspezifizierung zur Durchführung eines Redirect ausgebildet sind.
12. Computersystem nach Anspruch 10 oder 11, wobei der Browser ein Plug-In-Programm aufweist, durch welches der Client gestartet wird, nachdem von dem Browser die signierte Attributspezifizierung empfangen worden ist, und durch welches das erste Zertifikat an den Client übergeben wird.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen (Browser)
- 113: Programminstruktionen (Client)
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Zertifikat
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 142`: privater Schlüssel
- 144: Zertifikat
- 144`: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienst-Anforderung
- 166: Attributspezifizierung
- 168: Anforderung
- 170: Antwort
- 172: Protokoll-Stack-Komponente
- 174: Auswertungslogik
- 176: erstes Zertifikat
- 178: Angreifer
- 180: Zertifikat ZA
- 182: Attributspezifizierung (SAML-Objekt)
- 184: Verbindung
- 186: Berechtigungszertifikat
- 187: privater Schlüssel
- 188: ID-Provider Zertifikat
- 190: zweites Zertifikat

## Patentansprüche

1. Verfahren zum Lesen zumindest eines in einem ID-Token (106, 106') gespeicherten Attributs unter Verwendung von ersten (136), zweiten (150) und dritten (100) Computersystemen, wobei das dritte Computersystem einen Browser (112) und einen Client (113) beinhaltet, und wobei dem zweiten Computersystem ein Dienst-Zertifikat (144) zugeordnet ist, wobei das Dienst-Zertifikat einen Identifikator beinhaltet, durch welchen das zweite Computersystem identifiziert wird, wobei der ID-Token einem Nutzer (102) zugeordnet ist, mit folgenden Schritten:
- Aufbau einer ersten kryptographisch gesicherten Verbindung (TLS1) zwischen dem Browser des dritten Computersystems und dem zweiten Computersystem, wobei das zweite Computersystem das Dienst-Zertifikat an das dritte Computersystem überträgt,
- Empfang eines ersten Zertifikats (176) durch das dritte Computersystem, wobei das erste Zertifikat bei Vorliegen einer ausschließlich zwischen dem Browser des dritten Computersystems und dem zweiten Computersystem bestehenden ersten Verbindung das Dienstzertifikat ist,
- Speicherung des ersten Zertifikats durch das dritte Computersystem,
- Signierung einer Attributspezifizierung (182) durch das zweite Computersystem, wobei die Attributspezifizierung einen Identifikator des zweiten Computersystems beinhaltet,
- Empfang der signierten Attributspezifizierung durch das dritte Computersystem über die erste Verbindung,
- Aufbau einer zweiten kryptographisch gesicherten Verbindung (TLS2) zwischen dem Browser des dritten Computersystems und dem ersten Computersystem, wobei das dritte Computersystem ein zweites Zertifikat (190) empfängt,
- Weiterleitung der signierten Attributspezifizierung von dem dritten Computersystem über die zweite Verbindung an das erste Computersystem,
- Identifizierung eines Berechtigungszertifikats (186) des zweiten Computersystems im Speicher des ersten Computersystems anhand eines Identifikators, der in der von dem zweiten Computersystem signierten Attributspezifizierung enthalten ist, und wobei das erste Computersystem das Verfahren abbricht, sofern kein Berechtigungszertifikat identifiziert werden kann, das dem zweiten Computersystem zugeordnet ist,
- Zugriff auf das Berechtigungszertifikat durch das erste Computersystem, wobei das Berechtigungszertifikat eine Spezifizierung von Zugriffsrechten auf in dem ID-Token gespeicherte Attribute und einen Identifikator des zweiten Computersystems beinhaltet,
- Aufbau einer dritten kryptographisch gesicherten Verbindung (TLS3) zwischen dem ersten Computersystem und dem Client des dritten Computersystems, wobei das dritte Computersystem über die dritte Verbindung das Berechtigungszertifikat mit dem Identifikator empfängt,
- Prüfung durch den Client des dritten Computersystems, ob der Identifikator in dem ersten Zertifikat beinhaltet ist, als Nachweis dafür, dass das erste Zertifikat mit dem Dienst-Zertifikat übereinstimmt, wobei das Verfahren bei negativem Ausgang der Prüfung abgebrochen wird,
- Authentifizierung des Nutzers gegenüber dem ID-Token,
- Authentifizierung des ersten Computersystems gegenüber dem ID-Token,
- Aufbau einer vierten kryptographisch gesicherten Verbindung mit Ende-zu-Ende Verschlüsselung zwischen dem ID-Token und dem ersten Computersystem,
- Nach erfolgreicher Authentifizierung des Nutzers und des ersten Computersystems gegenüber dem ID-Token, Lesezugriff des ersten Computersystems auf das zumindest eine in dem ID-Token gespeicherte Attribut über die vierte Verbindung, um zumindest ein in der Attributspezifizierung spezifiziertes Attribut aus dem ID-Token auszulesen,
- Übertragung des zumindest einen Attributs nach dessen Signierung durch das erste Computersystem an das zweite Computersystem.

2. Verfahren nach Anspruch 1, wobei die Authentifizierung des ersten Computersystems gegenüber dem ID-Token mit Hilfe des Berechtigungszertifikats erfolgt, wobei das Berechtigungszertifikat eine Angabe derjenigen in dem ID-Token gespeicherten Attribute beinhaltet, für welche das erste Computersystem für den Lesezugriff berechtigt ist.

3. Verfahren nach Anspruch 2, wobei der ID-Token die Leseberechtigung des ersten Computersystems für den Lesezugriff auf zumindest eines der Attribute mit Hilfe des Berechtigungszertifikats überprüft.

4. Verfahren nach einem der Ansprüche 1, 2 oder 3, wobei es sich bei den ersten, zweiten und dritten Verbindungen jeweils um Transport-Schicht Verbindungen handelt und wobei die vierte Verbindung über die dritte Verbindung aufgebaut wird.

5. Verfahren nach einem der vorhergehenden Ansprüche, wobei die signierte Attributspezifizierung als SAML-Objekt empfangen wird und wobei das erste Computersystem eine SAML-Logik-Komponente (174) aufweist, zu der die zweite Verbindung aufgebaut wird, über die die SAML-Logik-Komponente das SAML-Objekt empfängt.

6. Verfahren nach Anspruch 5, wobei das erste Computersystem eine Protokoll-Stack-Komponente (172) beinhaltet, zu der die dritte Verbindung aufgebaut wird.

7. Verfahren nach einem der vorhergehenden Ansprüche, wobei dem ersten Computersystem eine ID-Provider Zertifikat (188) zugeordnet ist, das einen Identifikator des ersten Computersystems beinhaltet, wobei das ID-Provider Zertifikat (188) für den Aufbau der zweiten kryptographisch gesicherten Verbindung verwendet wird, und das daraufhin von dem ersten Computersystem empfangene zweite Zertifikat gespeichert wird, und wobei das Berechtigungszertifikat sowohl den Identifikator des ersten Computersystems als auch den Identifikator des zweiten Computersystems beinhaltet, wobei durch den Client des dritten Computersystems geprüft wird, ob der Identifikator des ersten Zertifikats (176) und der Identifikator des zweiten Zertifikats (176) in dem Berechtigungszertifikat beinhaltet sind, und wobei die vierte kryptographisch gesicherte Verbindung nur dann aufgebaut wird, wenn der Identifikator des ersten Zertifikats und der Identifikator des zweiten Zertifikats in dem Berechtigungszertifikat beinhaltet sind.

8. Computerprogrammprodukt mit von einem Datenverarbeitungssystem ausführbaren Instruktionen zur Durchführung eines Verfahrens nach einem der vorhergehenden Ansprüche.

9. Datenverarbeitungssystem mit
- einem ersten (136), einem zweiten (150) und einem dritten (100) Computersystem, wobei das dritte Computersystem die folgenden Elemente aufweist:
- einen Browser (112) und einen Client (110),
- Mittel (110, 112, 114) zum Empfang eines ersten Zertifikats (176) zum Aufbau einer ersten kryptografisch gesicherten Verbindung (TLS1) zwischen dem Browser und dem zweiten Computersystem, wobei das erste Zertifikat bei Vorliegen einer ausschließlich zwischen dem Browser des dritten und dem zweiten Computersystem bestehenden ersten kryptographisch gesicherten Verbindung das Dienstzertifikat des zweiten Computersystems ist,
- Mittel (100) zur Speicherung des ersten Zertifikats,
- Mittel (110, 112, 114) zum Empfang einer signierten Attributspezifizierung (182) über die erste Verbindung,
- Mittel (110, 112, 114) zum Empfang eines zweiten Zertifikats (190) zum Aufbau einer zweiten kryptografisch gesicherten Verbindung (TLS2) zwischen dem Browser und dem ersten Computersystem (136), wobei das zweite Zertifikat einen weiteren Identifikator beinhaltet,
- Mittel (112) zur Weiterleitung der über die erste Verbindung empfangenen signierten Attributspezifizierung über die zweite Verbindung,
- Mittel (110, 112, 113, 114) zum Aufbau einer dritten kryptografisch gesicherten Verbindung (TLS3) zwischen dem Client und dem ersten Computersystem, wobei über die dritte Verbindung ein Berechtigungszertifikat (186) mit einem Identifikator empfangen wird,
- Mittel zur Prüfung, ob das erste und das zweite Zertifikat den Identifikator des empfangenen Berechtigungszertifikats beinhalten, und
- wobei das zweite Computersystem die folgenden Elemente aufweist:
- Mittel zur Signierung einer Attributspezifizierung, wobei die Attributspezifizierung einen Identifikator des zweiten Computersystems beinhaltet und
- wobei das erste Computersystem die folgenden Elemente aufweist:
- Mittel zur Speicherung eines Berechtigungszertifikats des zweiten Computersystems,
- Mittel zur Identifizierung des Berechtigungszertifikats des zweiten Computersystems im Speicher anhand eines Identifikators, der in der von dem zweiten Computersystem signierten Attributspezifizierung enthalten ist,
- Mittel zum Zugriff auf das Berechtigungszertifikat, wobei das Berechtigungszertifikat eine Spezifizierung von Zugriffsrechten auf in dem ID-Token gespeicherte Attribute und einen Identifikator des zweiten Computersystems beinhaltet,
- Mittel zum Aufbau einer vierten kryptographisch gesicherten Verbindung mit Ende-zu-Ende Verschlüsselung zwischen dem ersten Computersystem und einem ID-Token (106),
- Mittel zur Authentifizierung des Nutzers und des ersten Computersystems gegenüber dem ID-Token, um einen Lesezugriff auf das zumindest eine in dem ID-Token gespeicherte Attribut über die vierte Verbindung zu ermöglichen,
- Mittel zum Lesen zumindest eines in dem ID-Token gespeicherten Attributs, um die in der Attributspezifizierung spezifizierten ein oder mehreren Attribute aus dem ID-Token auszulesen,
- Mittel zur Übertragung des zumindest einen Attributs nach dessen Signierung an das zweite Computersystem.

10. Datenverarbeitungssystem nach Anspruch 9, wobei die Mittel zur Weiterleitung der signierten Attributspezifizierung zur Durchführung eines Redirect ausgebildet sind.

11. Datenverarbeitungssystem nach Anspruch 9 oder 10, wobei der Browser ein Plug-In-Programm aufweist, durch welches der Client gestartet wird, nachdem von dem Browser die signierte Attributspezifizierung empfangen worden ist, und durch welches das erste Zertifikat an den Client übergeben wird.
